# EUROPEAN PATENT APPLICATION

(11) **EP 2 106 720 A1**
(43) Date of publication of application: **07.10.2009**
(21) Application number: 09001127.1
(22) Date of filing: 28.01.2009
(51) Int. Cl.: A47B 87/00

(54) **Table joining clip**

(30) Priority: 04.04.2008 ES 200800685 U
(71) Applicant: Resinas Olot, S.A., 17178 Les Preses Gerona (ES)
(72) Inventor: Chavarria Domingo, Joan, 17178 Les Preses, Gerona (ES)
(74) Representative: PROPI, S.L.

(57) **Abstract**

The invention described consists of a table joining clip, comprised of two parts (1) and (2), joined and articulated through joining means (5-5') provided in both parts (1) and (2). The part (2) is coupled to the lower part of the tabletop, whereupon the part moves freely for coupling by pivoting about the axis to the lower part of the tabletop of the adjacent table.

The part (2) has two sides, preferably triangular in shape, perpendicularly joined to a rectangular sheet in which an orifice (3) has been disposed for joining it to the lower part of the tabletop through the fixing means. The joining means (5) for hooking to the part (1) are located on the sides of said part (2), in the part opposite the coupling to the table. The part (1) has a recess (4) on its outer surface that prevents said part (1) from tripping with the orifice (3) joining means when the part (1) is folded.

## Description

### OBJECT OF THE INVENTION

The present invention relates to a table joining clip, used to join one table to another by the lower part of the tabletop thereof, thereby avoiding the annoying movements that can be produced. This clip is reduced in size and weight, being quick and easy to handle, hook or unhook. It is specially designed for conferences or similar, when several tables must be joined or separated.

### BACKGROUND OF THE INVENTION

We often have the need to join two or more tables for the purpose of creating a larger surface area, whether for work, conferences, exhibitions or similar. Many systems have been used to date with the intention of joining several tables to prevent these from moving, in order to make the use of the assembly more secure, without the risk of involuntary displacements and the consequent problems that could ensue.

Several different systems are known to exist in the state of the art, mainly based on the design of the table itself. This is the case, for example, of patent ES2244536, which consists of a table with at least two pairs of legs and a tabletop, in which the pairs of legs can be manually removed from said tabletop without tools, and which are joined together by means of a longitudinal crossbar. The fundamental idea of this table consists of providing a self-supporting lower frame that comprises the easily assembled legs, whereon the tabletop can then be largely placed and fixed "blindly". In order to join one table to another, the table has a crossbar whereto the legs are fixed and a pair of arms at each of its ends, which are used to support and fix the tabletops of different and consecutive tables.

This is an excellent system for assembling of a large number of tables that must be used joined together. However, the large amount of parts of each arm of the crossbar often makes the assembly to couple the tabletops not so fast and easy. Additionally, when the tables are to be used separately, leaving a single unit isolated, an arm of the crossbar remains visible from the side of the tabletop, which can cause tripping therewith, in addition to its unaesthetic appearance for conferences or exhibitions, and using a space that cannot be leveraged and preventing the possible positioning of the table against the wall.

### DESCRIPTION OF THE INVENTION

The invention described hereunder solves the previously expounded problems in a fully satisfactory manner. It consists of a table joining clip that is placed on the side of the lower part of the tabletop, in such a manner that it is not visible from the upper part neither when in use nor when the table is isolated. It is small in size and, thanks to this, it allows tables to be joined or separated faster than current systems, being very easy to handle.

This clip is susceptible to assembly and disassembly for use with other tables, provided that the characteristics of the table allow its use. The dimensions and shape thereof depend on each type of table, due to which it will be designed in accordance with the table to be used.

The table joining clip is comprised of two main parts, joined by joining means included in both parts that allow the movement of the coupling part to the lower part of the adjacent tabletop. One of the parts of the clip is joined to the lower part of the tabletop, through an orifice disposed preferably in the centre of said part, being fixed by that side without possibility of movement. The second part of the clip is joined to the opposite side of this part by joining means that allow the upward and downward movement of this second part. In this manner, in order to join two tables by their tabletops, these need only be joined by the side of the tabletop to be coupled and, with an upward movement, raise the mobile part of table towards the adjacent table. In this manner, both tables are hooked together, being fixed and without possibility of unwanted movements. In order to release the tables we only need to unhook the clip, pulling through a recess that facilitates said task, without having to carry out complex assemblies or disassemblies, and very quickly.

### DESCRIPTION OF THE DRAWINGS

For the purpose of completing this description and to better understand the characteristics of the invention, a set of drawings has been included in accordance with a preferred example of practical embodiment thereof , as an integral part of this specification, wherein the following figures have been represented in an illustrative and unlimitative manner:

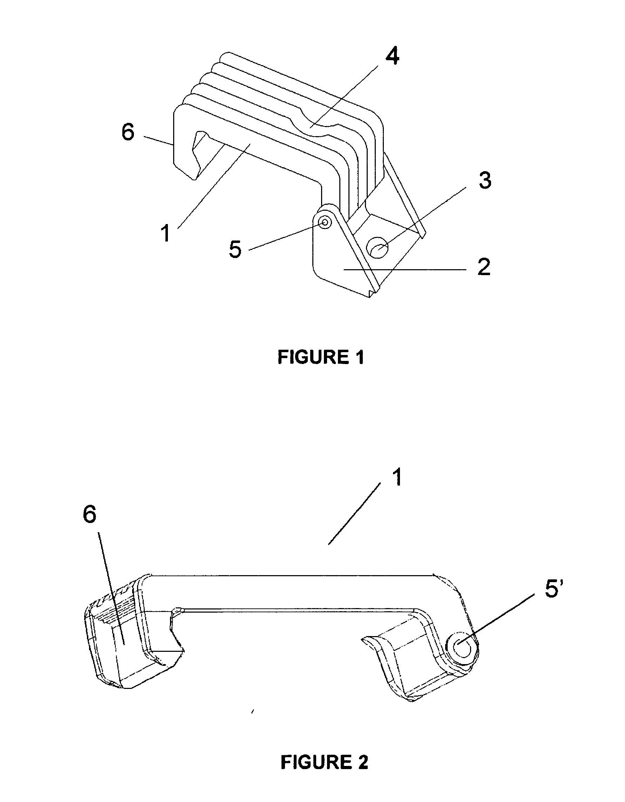

- Fig. 1: shows a perspective view of the assembly of the clip of the invention;
- Fig. 2: shows the part (1) of the clip assembly, where the detail of the front recess (6) can be seen; and

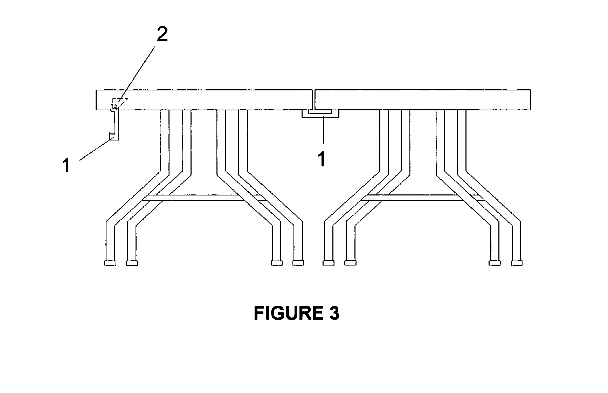

- Fig. 3: shows the table clip assembly placed underneath the tabletop, in its two possible positions, joining two tabletops, or when it is not in use underneath the tabletop (right side).

### PREFERRED EMBODIMENT OF THE INVENTION

The invention described consists of a table joining clip, comprised of two parts (1) and (2), joined and articulated through joining means (5-5') provided in both parts (1) and (2). The part (2) is coupled to the lower part of the tabletop, whereupon the part moves freely for coupling by pivoting about the axis to the lower part of the tabletop of the adjacent table.

The part (2) has two sides, preferably triangular in shape, perpendicularly joined to a rectangular sheet in which an orifice (3) has been disposed for joining it to the lower part of the tabletop through the fixing means. The joining means (5) for hooking to the part (1) are located on the sides of said part (2), in the part opposite the coupling to the table.

The part (1) has a hook shape for coupling to the lower part of the tabletop of the adjacent table and is characterised in that it has a front recess (6) on its outer side to facilitate the manual hooking and unhooking task. In the opposite part it has joining means (5') for coupling to the part (2). Additionally, the part (1) has a recess (4) on its outer surface that avoids the tripping of said part (1) with the joining means of the orifice (3) when the part (1) is folded.

## Claims

1. Table joining clip, **characterised in that** it consists of two parts (1) and (2), joined and articulated through joining means (5-5') provided in both parts (1) and (2), and in such a manner that the part (2) is coupled to the lower part of the tabletop, whereupon the part moves freely for coupling by pivoting about the axis to the lower part of the tabletop of the adjacent table.

2. Table joining clip, according to claim 1, **characterised in that** the part (2) has two sides preferably triangular in shape, perpendicularly joined to a rectangular sheet in which an orifice (3) has been disposed for joining it to the lower part of the tabletop through the fixing means.

3. Table joining clip, according to the preceding claims, **characterised in that** the part (1) has a recess (4) on its outer surface that prevents said part (1) from tripping with the orifice (3) joining means when the part (1) is folded.

4. Table joining clip, according to the preceding claims, **characterised in that** the part (1) has a front recess (6) on its exterior to facilitate the manual hooking and unhooking task.
